# EUROPÄISCHE PATENTANMELDUNG

(11) **EP 1 617 543 A2**
(43) Veröffentlichungstag der Anmeldung: **18.01.2006**
(21) Anmeldenummer: 05008680.0
(22) Anmeldetag: 20.04.2005
(51) Int. Cl.: H02K 15/10

(54) **Einrichtung zur Isolation von Statornuten**

(30) Priorität: 13.07.2004 DE 202004010956 U
(71) Anmelder: MINEBEA Co., Ltd., Kitasaku-gun, Nagano-ken 3849-2100 (JP)
(72) Erfinder: Schneider, Helmut, 78658 Zimmern-Flözlingen (DE); Kreiensen, Ulrich, 78652 Deisslingen (DE)
(74) Vertreter: Liesegang, Eva

(57) **Zusammenfassung**

Die Erfindung betrifft eine Einrichtung zur Isolation von Statornuten einer elektrischen Maschine, die einen Stator mit einer Vielzahl von Hämmern und zwischen den Hämmern liegenden Statornuten aufweist, mit einem Isolationkörper, der an die Form der Statornuten angepaßte Ausformungen (14 bis 20) aufweist und in axialer Richtung auf den Stator aufschiebbar ist und eine Abdeckvorrichtung (42), die mit einer Stirnseite des Isolationskörpers verbindbar ist, um nach dem Aufbringen von Wicklungen (36) auf den Isolationskörper die Wicklungen (36) an der Stirnseite des Stators zu führen und abzudecken.

## Beschreibung

Die Erfindung betrifft eine Einrichtung zur Isolation von Statornuten einer elektrischen Maschine, die einen Stator mit einer Vielzahl von Hämmern und zwischen den Hämmern liegenden Statornuten aufweist.

Ein Hauptanwendungsgebiet der Erfindung ist das Gebiet der bürstenlosen Gleichstrommotoren und anderer Permanentmagnetmotoren, die als Innenläufermotor oder Außenläufermotor konfiguriert sind. Die Erfindung ist jedoch ohne Beschränkung hierauf allgemein auf jede Art von Elektromotor oder Generator anwendbar.

Elektromotoren mit einer Innenläuferkonfiguration weisen eine Rotoranordnung auf, die auf der Motorwelle montiert ist und einen oder mehrere Permanentmagnete umfaßt, sowie eine Statoranordnung aus zum Beispiel einer Anzahl von paketierten Metallblechen, die einen ringförmigen Statorrückschluß und von dem Statorrückschluß nach innen abstehende Hämmer aufweist. Auf den Hämmern sind Phasenwicklungen aufgebracht. Die Rotoranordnung ist koaxial in die Statoranordnung eingefügt. Bei Außenläufermotoren umgibt der Rotor den Stator koaxial.

Vor dem Bewickeln der Hämmer des Stators mit den Phasenwicklungen der elektrischen Maschine müssen die Hämmer elektrisch isoliert werden. Zu diesem Zweck ist es bekannt, auf die Hämmer Spulenträger aus Kunststoff aufzubringen. Es ist auch bekannt, die Hämmer und die zwischen den Hämmern liegenden Statornuten mit einer Kunststoffbeschichtung zu versehen. Im Stand der Technik sind ferner zweiteilige Isolationskörper aus Kunststoff bekannt, welche einen ersten und einen zweiten Teil mit an die Form der Hämmer und der Statornuten angepaßten Ausformungen aufweisen, die in axialer Richtung beidseits auf den Stator aufschiebbar sind. Die beiden Teile des Isolationskörpers sind in axialer Richtung so bemessen, daß ihre an die Hämmer und Statornuten angepaßten Ausformungen sich nach dem Aufbringen auf einen Stator teilweise über die axiale Länge der Statornuten erstrecken und an ihren Grenzflächen aneinanderstoßen. Abhängig von den Toleranzen bei der Fertigung der zwei Teile des Isolationskörpers kann sich ein Spalt zwischen den beiden Teilen ergeben, wenn diese in der Summe kürzer sind als die axiale Länge des Stators; oder es kann geschehen, daß die beiden Teile des Isolationskörpers einander überlappen, so daß sich auf Grund der Materialstärke im Überlappungsbereich ein Luftspalt zwischen dem Isolationskörper und dem Stator ergibt, wenn die beiden Teile des Isolationskörpers in der Summe länger sind als die axiale Länge des Stators. Ein Spalt zwischen den beiden Teilen des Isolationskörpers kann dazu führen, daß die Hämmer des Stators nicht ausreichend gegen die Phasenwicklungen isoliert sind. Ferner birgt ein Luftspalt zwischen der Isolation und dem Statormaterial die Gefahr, daß Kriechstromstrecken gebildet werden. Aus dem Stand der Technik sind auch zweiteilige Isolationskörper für Statornuten bekannt, welche in einem Überlappungsbereich einen Falz oder eine Schräge aufweisen.

Bei den elektrischen Maschinen des Standes der Technik, welche einen solchen Isolationskörper aufweisen, ist es üblich, daß die Wickelköpfe und Wicklungsenden der Phasenwicklungen nach dem Bewickeln des Stators einzeln gebunden und an dem Stator fixiert bzw. von diesem weg geführt werden. Dieser Prozeß ist sehr arbeitsaufwendig, wobei die Phasenwicklungen des bewickelten Stators häufig unübersichtlich angeordnet sind und nicht ohne weiteres erkennbar ist, wo die jeweiligen Wicklungsenden aus dem Stator herausgeführt sind.

Es ist die Aufgabe der Erfindung, eine Einrichtung zur Isolation von Statornuten einer elektrischen Maschine anzugeben, die einfach und übersichtlich aufgebaut ist und eine vollständige Isolation der Statornuten gewährleistet.

Die Erfindung sieht einen Isolationskörper vor, der an die Form der Statornuten angepaßt Ausformungen aufweist. Der Isolationskörper ist in axialer Richtung auf den Stator aufschiebbar. An einer Stirnseite des Isolationskörpers ist eine Abdeckvorrichtung vorgesehen, um nach dem Aufbringen der Wicklungen auf den Isolationskörper diese an der Stirnseite des Stators auf übersichtliche Weise zu führen und abzudecken. In der Praxis werden, nachdem der Isolationskörper auf den Stator aufgebracht ist, Phasenwicklungen um die Statorhämmer gewickelt, welche die Statornuten füllen und an den beiden Stirnseiten des Stators einen Wikkelkopf bilden. Um die Wickelköpfe abzudecken und die Wicklungsenden auf geordnete Weise zusammenzufassen und zu führen, wird an der Stirnseite des Stators, an welche die Wicklungsenden herausgeführt werden sollen, die Abdeckvorrichtung vorgesehen.

Die Abdeckvorrichtung kann beispielsweise als eine ringförmige Abdeckplatte ausgebildet sein, die auf dem Isolationskörper mit Abstand zu den Ausformungen gehalten ist, um den Wickelkopf zwischen dem Isolationskörper und der Abdeckplatte einzuschließen. Es können auch an beiden Stirnenden des Stators solche Abdeckplatten vorgesehen werden. Diese Ausführung hat den Vorteil, daß die Einrichtung zur Isolation der Statornuten gleichzeitig auch die Funktion der Abdeckung des Wickelkopfs übernehmen kann, so daß die Wicklungen an der Außenseite des Stators geführt sind, dieser gegen Einflüsse von außen geschützt ist und weitere Motorteile am Stator befestigt werden können.

Vorzugsweise umfaßt die Abdeckvorrichtung mindestens einen Kanal zur Führung von Wikkeldrähten, Mittel zum Anbringen von Teilen der Motorelektrik, wie einer Leiterplatte, sowie Mittel zum Befestigen der Wickeldrahtenden. Diese Vorkehrungen führen zu einem besonders einfachen und übersichtlichen Aufbau des Elektromotors, bei dem verschiedene Komponenten der Motorelektrik und -elektronik an der Abdeckplatte geführt und befestigt werden können, so daß keine zusätzlichen Halte- und Klemmbauteile für diese Komponenten notwendig sind. Es ist nicht notwendig, die Wickelköpfe und die Wickeldrahtenden einzeln zu binden oder auf andere Weise am Stator zu fixieren und zu führen.

Bei einer besonders zweckmäßigen Ausführung der Erfindung ist die Abdeckvorrichtung mit dem Teil des Isolationskörper über Schnapphaken verbunden.

Die Erfindung sieht ferner einen zweiteiligen Isolationskörper vor, der einen ersten und einen zweiten Teil mit an die Form der Statornuten des Stators angepaßten Ausformungen aufweist. Die beiden Teile des Isolationskörpers sind in axialer Richtung beidseits auf den Stator aufschiebbar, wobei jedes Teil des Isolationskörpers in axialer Richtung so bemessen ist, daß die an die Statornuten angepaßten Ausformungen sich nach dem Aufschieben auf den Stator wenigstens teilweise über die axiale Länge der Statornuten erstrecken und einander in axialer Richtung überlappen. In dem Bereich, in dem sich die beiden Teile des Isolationskörpers überlappen, greift eine erste Gruppe der Ausformungen des ersten Teils in gegenüberliegende Ausformungen des zweiten Teils ein, und eine zweite Gruppe der Ausformungen des ersten Teils umfaßt gegenüberliegende Ausformungen des zweiten Teils. Anders als beim Stand der Technik grenzen somit die beiden Teile des Isolationskörpers nicht mit planen Flächen aneinander. Sie sind auch nicht so ausgebildet, daß das erste Teil in einem Überlappungsbereich vollständig in das zweite Teil eingeschoben wird oder umgekehrt. Vielmehr sind die beiden Teile des Isolationskörpers so ausgebildet, daß in dem Überlappungsbereich ein Teil der Ausformungen des ersten Teils die korrespondierenden Ausformungen des zweiten Teils umgreift und ein anderer Teil der Ausformung des ersten Teils in die korrespondierenden Ausformungen des zweiten Teils eingefügt wird. Für einen Stator mit einer geraden Anzahl von Hämmern bzw. Nuten, werden die Ausformungen des ersten und des zweiten Teils vorzugsweise so ausgebildet, daß sie abwechselnd in die korrespondierenden gegenüberliegenden Ausformungen des jeweils anderen Teils eingefügt werden bzw. diese umgreifen. Dadurch ergibt sich ein besonders inniger Kontakt zwischen den beiden Teilen des Isolationskörpers, und Lufteinschlüsse sowie Luftspalte im Überlappungsbereich können weitestgehend vermieden werden. In einer vorteilhaften Ausführung der Erfindung sind die beiden Teile des Isolationskörpers baugleich und werden im Überlappungsbereich übereinander geschoben. Dies hat den Vorfeil, daß gleiche Isolationskörper mit geringem Aufwand für die Werkzeugherstellung gefertigt werden kann.

In einer bevorzugten Ausführung der Erfindung weisen die Ausformungen der ersten und der zweiten Gruppe des ersten Teils im Überlappungsbereich eine Außenfase bzw. eine Innenfase auf, und die korrespondierenden gegenüberliegenden Ausformungen des zweiten Teils weisen komplementär hierzu eine Innenfase bzw. eine Außenfase auf. Anstelle einer Außenfase und einer Innenfase können auch ein Außenfalz oder eine außen liegende Stufe bzw. ein Innenfalz oder eine innen liegende Stufe an den einander zugewandten Rändern der Ausformungen der beiden Teile des Isolationskörpers vorgesehen werden. Die Ausbildung eines Falzes oder einer Stufe im Überlappungsbereich hat den Vorteil, daß nach dem Zusammenfügen der beiden Teile des Isolationskörpers immer eine konstante Wandstärke der Isolation erzielt wird. Aus fertigungstechnischer Sicht haben ein Falz oder eine Stufe jedoch insbesondere bei dünnen Wandstärken den Nachteil, daß sich ungünstige Fließwege beim Spritzgußprozeß ergeben. Das Vorsehen von schrägen Überlappungsbereichen führt zu einem günstigeren Wandstärkenverlauf für den Spritzgußprozeß, insbesondere wenn dünne Wandstärken vorgesehen werden. Die Ausformungen des ersten und des zweiten Teils können im Überlappungsbereich auch auf andere Weise mit verringerter Materialstärke ausgebildet sein, so daß sich nach dem Zusammenfügen der beiden Teile des Isolationskörpers eine stufenlose glatte Wand ergibt, welche an den Hämmern und Nuten des Stators flächig anliegt.

Die verschiedenen oben genannten Ausführungen des Isolationskörpers haben den Vorteil, daß nach dem Zusammenfügen der beiden Teile des Isolationskörpers eine ebene, stufenlose Isolationsschicht entsteht, welche an den Nuten und Hämmern des Stators anliegt und diese ohne die Gefahr von Lufteinschluß oder Spaltbildung zuverlässig isoliert.

In der Praxis werden, nachdem der Isolationskörper auf den Stator aufgebracht ist, Phasenwicklungen um die Statorhämmer gewickelt, welche die Statornuten füllen und an den beiden Stirnseiten des Stators einen Wickelkopf bilden. Eine Abdeckvorrichtung kann an der Stirnseite des ersten oder des zweiten Teils des Isolationskörpers angebracht werden, um an dieser Stirnseite des Stators nach dem Aufbringen der Wicklungen den Wickelkopf abzudecken.

Der Isolationskörper und die Abdeckplatte sind vorzugsweise Kunststoff-Spritzgußteile.

Die Erfindung ist im folgenden anhand bevorzugter Ausführungen mit Bezug auf die Zeichnungen näher erläutert. In den Figuren zeigen:
- Fig. 1: eine perspektivische Darstellung eines zweiteiligen Isolationskörpers gemäß der Erfindung;
- Fig. 2: eine perspektivische, geschnittene Teilansicht eines Stators, auf den eine Isolationseinrichtung gemäß der Erfindung aufgebracht ist;
- Fig. 3: eine perspektivische Außenansicht eines Stators, auf den eine Isolationseinrichtung gemäß der Erfindung aufgebracht ist;
- Fig. 4: eine Längsschnittdarstellung durch einen Elektromotor mit einer erfindungsgemäßen Isolationseinrichtung.

Die Erfindung ist im folgenden am Beispiel eines bürstenlosen Gleichstrommotors mit Innenläuferkonfiguration beschrieben. Der Fachmann wird jedoch verstehen, daß die Grundsätze der Erfindung auf jede Art von Elektromotor oder Generator anwendbar sind.

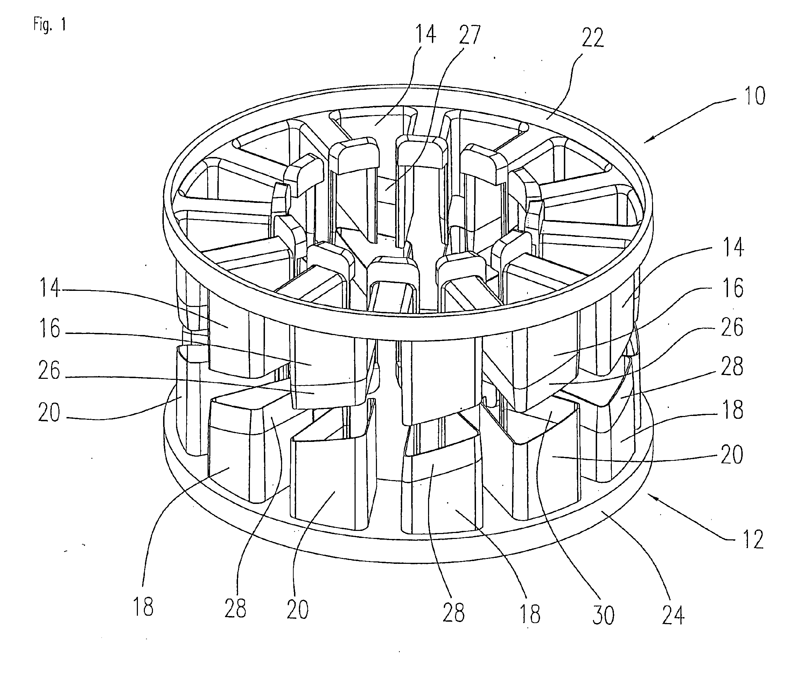

Fig. 1 zeigt eine perspektivische Darstellung eines zweiteiligen Isolationskörpers gemäß der Erfindung. Der Isolationskörper umfaßt einen ersten Teil 10 und einen zweiten Teil 12. Jeder der beiden Teile 10, 12 des Isolationskörpers ist mit Ausformungen 14, 16, 18, 20 versehen, welche an die Form der Statornuten eines Stators, auf den der Isolationskörper 10, 12 aufgebracht werden soll, angepaßt sind. Aus Fig. 1 ist zu erkennen, daß jede der Ausformungen 14, 16, 18, 20 eine Statornut vollständig auskleidet, wobei die Seitenflächen des zwischen zwei Statornuten liegenden Hammers durch benachbarte Ausformungen mit einem Isolationsmantel versehen werden. Die Ausformungen 14, 16 des ersten Teils 10 sowie die Ausformungen 18, 20 des zweiten Teils 12 sind bei der gezeigten Ausführung jeweils durch einen Stabilisierungsring 22 bzw. 24 verbunden.

Bei der in Fig. 1 gezeigten Ausführung ist jede zweite Ausformung 16 des ersten Teils 10 mit einer Außenfase 26 versehen, wobei die übrigen Ausformungen 14 eine Innenfase 27 aufweisen. Entsprechend weist jede zweite Ausformung 18 des zweiten Teils 12, welche einer Ausformung 14 mit Innenfase 27 des ersten Teils 10 gegenüberliegt, eine Außenfase 28 auf, und die übrigen Ausformungen 20 des zweiten Teils 12 weisen eine entsprechende Innenfase 30 auf.

Nach dem Aufbringen der beiden Teile 10, 12 des Isolationskörpers auf einen Stator überlappen sich diese im Bereich der Innen- und Außenfasen 26, 27, 28, 30 derart, daß die Ausformungen 14, 16, 18, 20 der beiden Teile 10, 12 abwechselnd ineinandergreifen. Das heißt, wenn eine Ausformung 14 des ersten Teils eine Ausformung 18 des zweiten Teils umgreift, dann umgreift eine benachbarte Ausformung 20 des zweiten Teils die korrespondierende benachbarte Ausformung 16 des ersten Teils. Dadurch ergibt sich ein besonders inniger Kontakt zwischen den beiden Teilen 10, 12 des Isolationskörpers.

Anstelle der in Fig. 1 gezeigten Fasen 26, 27, 28, 30 können im Überlappungsbereich auch Innen- und Außenfalze an den Ausformungen vorgesehen werden. Auch ist es möglich, die Materialstärke der Ausformungen im Überlappungsbereich beispielsweise stufenförmig zu verringern, so daß nach dem Zusammenfügen des ersten und des zweiten Teils 10, 12 des Isolationskörpers eine geschlossene Isolationswand gleichmäßiger Dicke entsteht.

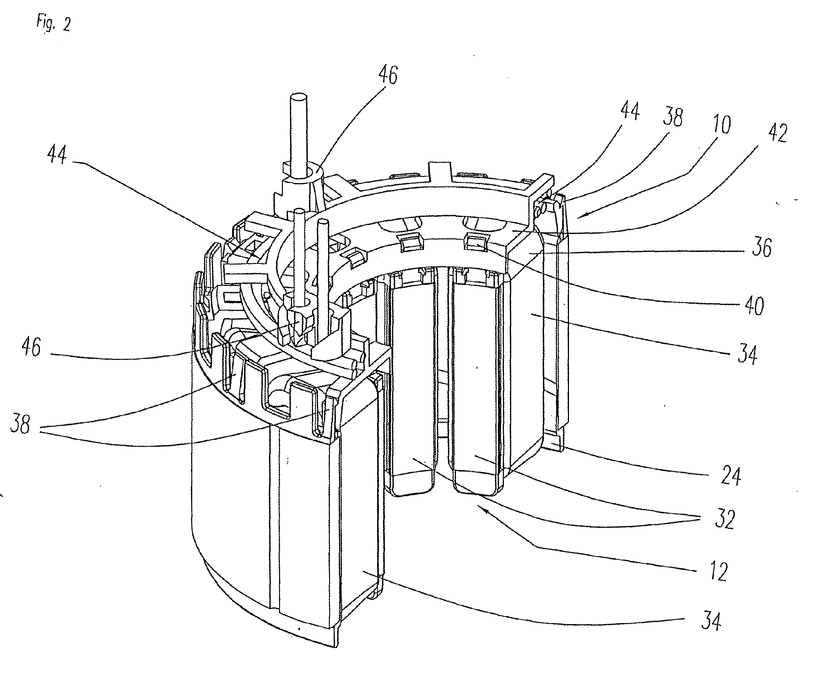

Fig. 2 zeigt eine perspektivische, geschnittene Darstellung eines Statorkörpers mit einer Einrichtung zur Isolation der Statornuten gemäß einer weiteren Ausführung der Erfindung. In Fig. 2 sind die beiden Teile 10, 12 des Isolationskörpers in zusammengefügtem Zustand, aufgebracht auf einen Stator dargestellt. Ein Übergang zwischen den beiden Teilen 10, 12 in Fig. 2 ist nicht erkennbar. In der Ausführung der Fig. 2 kann der Isolationskörper wie mit Bezug auf Fig. 1 beschrieben ausgebildet sein; es ist jedoch auch möglich, den Isolationskörper so auszubilden, daß eines der beiden Teile sich im wesentlichen über die gesamte axiale Länge des Stators erstreckt, während das andere Teil nur das dann noch offene Stirnende des Stators abdeckt. Insgesamt sind die Statorhämmer 32 des Stators von dem ersten und dem zweiten Teil 10, 12 des Isolationskörpers umgeben, wobei die isolierten Statorhämmer 32 Phasenwicklungen 34 tragen, welche an den Stirnenden des Stators Wickelköpfe 36 bilden. Die Phasenwicklung 34 und die Wickelköpfe 36 sind in Fig. 2 nur schematisch dargestellt. Der zweite Teil 12 des Isolationskörpers weist wie bei der Ausführung der Fig. 1 einen Stabilisierungsring 24 auf. Bei dem ersten Teil 10 des Isolationskörpers ist dieser Stabilisierungsring ersetzt durch Schnapphaken 38, 40, welche zur Befestigung einer Abdeckplatte 42 über dem Wickelkopf 36 dienen. Selbstverständlich liegt jede andere geeignete Verbindung der Teile 10, 12 mit der Abdeckplatte 42 im Bereich der Erfindung, beispielsweise durch Vorsehen von Nokken (nicht gezeigt).

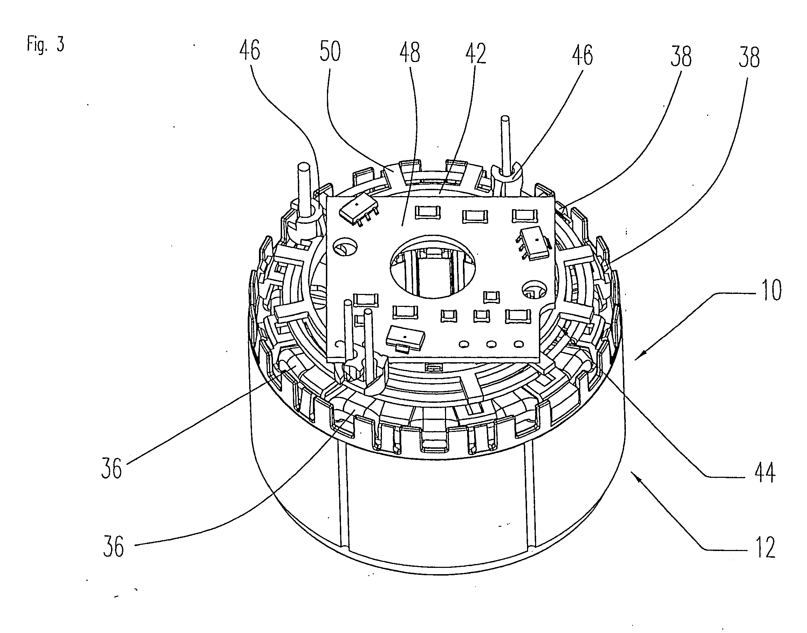

Die Abdeckplatte 42 dient zur Führung der Wickeldrähte, zum Abdecken des Wickelkopfes und zum Abgrenzen des Wickelraumes gegen bewegliche Teile des Elektromotors, die innerhalb des Stators angeordnet sind. Die Abdeckplatte 42 weist zusätzlich Mittel zum Führen und Befestigen verschiedener elektrischer und elektronischer Komponenten des Elektromotors auf. So sind an der Abdeckplatte 42 ein Kanal 44 zum Aufnehmen und Führen von Wikkeldrähten vorgesehen sowie Führungselemente 46 zum Aufnehmen und Positionieren von Wicklungsenden angeformt. Die Führungselemente 46 können beispielsweise nach Art von geschlossenen oder teilweise offenen Hülsen ausgebildet sein. An der Abdeckplatte 42 können ferner Mittel zum Anbringen weiterer elektronischer Bauteile des Elektromotors und insbesondere einer Leiterplatte vorgesehen sein, wie mit Bezug auf Fig. 3 weiter erläutert ist. Durch Vorsehen der Abdeckplatte mit einem Kanal 44 zum Aufnehmen und Führen der Wicklungsdrähte sowie zusätzlichen Führungselementen 46 zum Aufnehmen und Positionieren der Wicklungsenden ist es möglich, einen integrierten Isolationskörper zu schaffen, der zusätzlich die Funktion der Leitung und Zusammenfassung der Wicklungsdrähte übernimmt und von dem die Wicklungsenden auf geordnete Weise abgeleitet werden können. Dadurch vereinfacht sich die Montage des Stators insgesamt, und es wird ein bewickelter Stator erhalten, der übersichtlicher und leichter innerhalb der elektrischen Maschine anzuschließen ist als ein Stator mit einer Nutisolation gemäß dem Stand der Technik.

Fig. 3 zeigt eine ähnliche Darstellung wie Fig. 2, wobei in Fig. 3 der Stator vollständig geschlossen und auf ein Stirnende des Stators eine Sensorplatine 48 aufgebracht ist. Korrespondiere Teile wie in Fig. 2 sind mit denselben Bezugszeichen bezeichnet und nicht nochmals im einzelnen beschrieben. Fig. 3 läßt die auf die Stirnseite des Stators aufgebrachte Abdeckplatte 42 erkennen, welche einen Kanal 44 zur Aufnahme von Phasenwicklungen aufweist. An der Abdeckplatte 42 sind Führungselemente 46 für Wicklungsenden vorgesehen. An der Abdeckplatte 42 ist ferner ein Platinenträger 50 zum Aufnehmen der Sensorplatine 48 angebracht. Der Platinenträger 50 kann als ein getrenntes Bauteil an der Abdeckplatte 42 angebracht oder mit dieser einteilig ausgebildet sein. Bei der gezeigten Ausführung sind die Abdeckplatte 42, die Führungselemente 46 sowie der Platinenträger 50 als ein einteiliges Bauteil, beispielsweise durch Spritzgießen aus Kunststoff, hergestellt. Auch die beiden Teile 10, 12 des Isolationskörpers werden vorzugsweise durch Spritzgießen aus Kunststoff hergestellt.

Die Sensorplatine 48 kann z.B. die notwendige Sensorik für die Erfassung der Drehlage und elektronische Komponenten für die Steuerung von bürstenlosen Gleichstrommotoren aufnehmen.

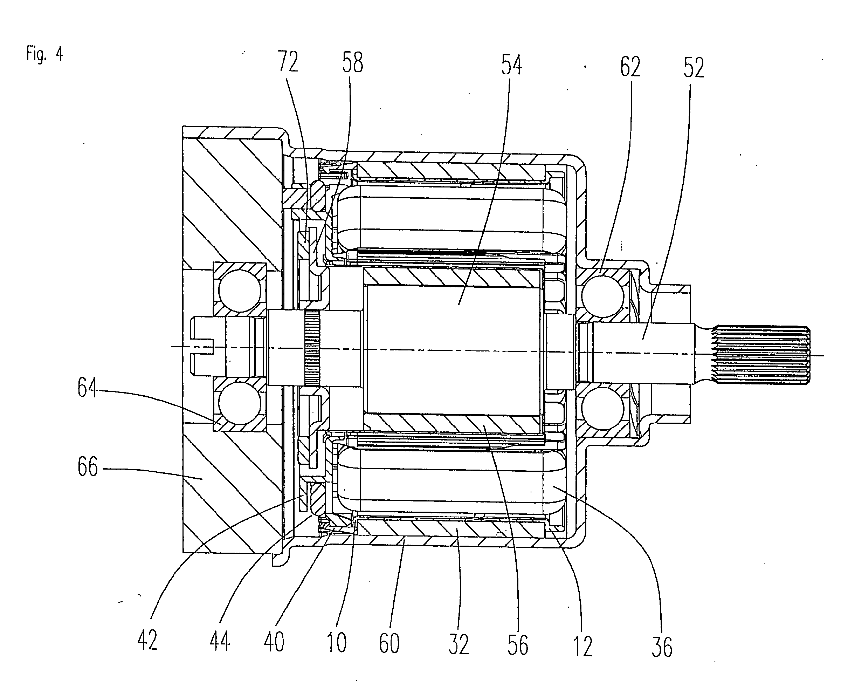

Fig. 4 zeigt eine Längsschnittdarstellung durch einen Elektromotor, in den die erfindungsgemäße Einrichtung zur Isolation der Statornuten eingesetzt ist. Korrespondierende Teile sind mit denselben Bezugszeichen wie in den Fig. 1 bis 3 gekennzeichnet.

Die in Fig. 4 gezeigte Längsschnittdarstellung durch den Elektromotor läßt eine Welle 52 mit einem integrierten Rotorrückschluß 54 und darauf aufgebrachten Permanentmagneten 56 schematisch erkennen. Die Rotoranordnung 54, 56 ist in den Stator eingefügt, der in Fig. 4 schematisch durch Statorhämmer 32, die Wicklung 36 sowie die beiden Teile 10, 12 des Isolationskörpers dargestellt ist. Der erste Teil 10 des Isolationskörpers trägt die Abdeckplatte 42, welche eine Sensorplatine oder dergleichen aufnehmen kann. Auf die Welle 52 ist ferner eine Rotornabe 58 aufgebracht, die einen Steuermagneten 72 für die Erfassung der Rotorlage trägt. Dem Steuermagnet 72 gegenüberliegend ist eine Sensorplatine (nicht gezeigt) angeordnet, die beispielsweise Hall-Sensoren und/oder Spulen trägt, um die Rotorlage zu erfassen und aus der Rotorlage zum Beispiel Kommutierungssignale abzuleiten. Stator und Rotor sind von einer Gehäusewand 60 umschlossen, in welche an dem Abtriebsende der Welle 52 ein Lager 62 zur Lagerung der Welle 52 integriert ist. An dem gegenüberliegenden Ende der Welle 52 ist ein Lager 64 angeordnet, welches in einen Deckel 66 des Motors integriert ist.

Fig. 4 dient lediglich als ein Beispiel für einen Elektromotor, in den die erfindungsgemäße Einrichtung zur Isolation der Statornuten eingesetzt werden kann, wobei die Erfindung auf die gezeigte Ausführung in keiner Weise beschränkt ist. Die in der vorstehenden Beschreibung, den Ansprüchen und den Figuren offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 10, 12: Teile des Isolationskörpers
- 14, 16, 18, 20: Ausformungen
- 22, 24: Stabilisierungsring
- 26,28: Außenfase
- 27,30: Innenfase
- 32: Statorhämmer
- 34: Phasenwicklung
- 36: Wicklung
- 38,40: Schnapphaken
- 42: Abdeckplatte
- 44: Kanal
- 46: Führungselemente
- 48: Sensorplatine
- 50: Platinenträger
- 52: Welle
- 54: Rotorrückschluß
- 56: Permanentmagnete
- 58: Rotornabe
- 60: Gehäusewand
- 62,64: Lager
- 66: Deckel
- 72: Steuermagnet

## Patentansprüche

1. Einrichtung zur Isolation von Statornuten einer elektrischen Maschine, die einen Stator mit einer Vielzahl von Hämmern und zwischen den Hämmern liegenden Statornuten aufweist, mit
einem Isolationkörper, der an die Form der Statornuten angepaßten Ausformungen (14 bis 20) aufweist und in axialer Richtung auf den Stator aufschiebbar ist,
**gekennzeichnet durch** eine Abdeckvorrichtung (42), die mit einer Stirnseite des Isolationskörpers verbindbar ist, um nach dem Aufbringen von Wicklungen (36) auf den Isolationskörper die Wicklungen (36) an der Stirnseite des Stators zu führen und abzudecken.

2. Einrichtung nach Anspruch 1, **dadurch gekennzeichnet, daß** die Abdeckvorrichtung eine ringförmige Abdeckplatte (42) umfaßt, die auf dem Isolationskörper mit Abstand zu den Ausformungen (14 bis 20) gehalten ist.

3. Einrichtung nach Anspruch 1 oder 2, **dadurch gekennzeichnet, daß** die Abdeckvorrichtung einen Kanal (44) zur Führung von Wickeldrähten aufweist.

4. Einrichtung nach einem der vorangehenden Ansprüche, **dadurch gekennzeichnet, daß** die Abdeckvorrichtung Mittel (50) zum Anbringen einer Leiterplatte aufweist.

5. Einrichtung nach einem der vorangehenden Ansprüche, **dadurch gekennzeichnet, daß** die Abdeckvorrichtung Mittel (46) zum Befestigen und Herausführen von Wickeldrahtenden aufweist.

6. Einrichtung nach einem der vorangehenden Ansprüche, **dadurch gekennzeichnet, daß** die Abdeckvorrichtung (42) mit dem Isolationskörper über Schnapphaken (38, 40) verbunden ist.

7. Einrichtung nach einem der vorangehenden Ansprüche, **dadurch gekennzeichnet, daß** der Isolationskörper und die Abdeckvorrichtung Kunststoff-Spritzgußteile umfassen.

8. Einrichtung nach einem der vorangehenden Ansprüche, **dadurch gekennzeichnet, daß** der Isolationskörper einen ersten und einen zweiten Teil (10, 12) mit an die Form der Statornuten angepaßten Ausformungen (14 bis 20) aufweist, welche in axialer Richtung beidseits auf den Stator aufschiebbar sind, wobei jeder Teil des Isolationskörpers in axialer Richtung so bemessen ist, daß die an die Statornuten angepaßten Ausformungen (14 bis 20) des ersten und des zweiten Teils (10, 12) sich wenigstens teilweise über die axiale Länge der Statornuten erstrecken und einander in axialer Richtung überlappen, wobei eine erste Gruppe der Ausformungen (16) des ersten Teils (10) in gegenüberliegende Ausformungen (20) des zweiten Teils (12) eingreift und eine zweite Gruppe der Ausformungen (14) des ersten Teils gegenüberliegende Ausformungen (18) des zweiten Teils umfaßt.

9. Einrichtung zur Isolation von Statornuten einer elektrischen Maschine, die einen Stator mit einer Vielzahl von Hämmern und zwischen den Hämmern liegenden Statornuten aufweist, mit
einem zweiteiligen Isolationkörper, der einen ersten und einen zweiten Teil (10, 12) mit an die Form der Statornuten angepaßten Ausformungen (14 bis 20) aufweist, welche in axialer Richtung beidseits auf den Stator aufschiebbar sind, wobei jeder Teil des Isolationskörpers in axialer Richtung so bemessen ist, daß die an die Statornuten angepaßten Ausformungen (14 bis 20) des ersten und des zweiten Teils (10, 12) sich wenigstens teilweise über die axiale Länge der Statornuten erstrecken und einander in axialer Richtung überlappen, wobei eine erste Gruppe der Ausformungen (16) des ersten Teils (10) in gegenüberliegende Ausformungen (20) des zweiten Teils (12) eingreift und eine zweite Gruppe der Ausformungen (14) des ersten Teils gegenüberliegende Ausformungen (18) des zweiten Teils umfaßt.

10. Einrichtung nach Anspruch 9, **dadurch gekennzeichnet, daß** im Überlappungsbereich die Ausformungen (14) der ersten Gruppe des ersten Teils eine Innenfase und die gegenüberliegenden Ausformungen (18) des zweiten Teils eine Außenfase aufweisen und die Ausformungen (16) der zweiten Gruppe des ersten Teils eine Außenfase und die gegenüberliegenden Ausformungen (20) des zweiten Teils eine Innenfase aufweisen.

11. Einrichtung nach Anspruch 9, **dadurch gekennzeichnet, daß** im Überlappungsbereich die Ausformungen der ersten Gruppe des ersten Teils einen Außenfalz und die gegenüberliegenden Ausformungen des zweiten Teils einen Innenfalz aufweisen und die Ausformungen der zweite Gruppe des ersten Teils einen Innenfalz und die gegenüberliegenden Ausformungen des zweiten Teils einen Außenfalz aufweisen.

12. Einrichtung nach einem der Ansprüche 9 bis 11, **dadurch gekennzeichnet, daß** die Ausformungen (14, 18) der ersten Gruppe und die Ausformungen (16, 20) der zweiten Gruppe abwechselnd nebeneinander angeordnet sind.

13. Einrichtung nach einem der Ansprüche 9 bis 12, **gekennzeichnet durch** eine Abdeckvorrichtung (42), die mit einer Stirnseite des ersten oder des zweiten Teils (10, 12) des Isolationskörpers verbindbar ist, um nach dem Aufbringen von Wicklungen auf den Isolationskörper die Wicklungen (36) an der Stirnseite des Stators zu führen und abzudecken.

14. Einrichtung nach Anspruch 13, **dadurch gekennzeichnet, daß** die Abdeckvorrichtung einen Kanal (44) zur Führung von Wickeldrähten aufweist.

15. Einrichtung nach einem der Ansprüche 13 oder 14, **dadurch gekennzeichnet, daß** die Abdeckvorrichtung Mittel (50) zum Anbringen einer Leiterplatte aufweist.

16. Einrichtung nach einem der Ansprüche 13 bis 15, **dadurch gekennzeichnet, daß** die Abdeckvorrichtung Mittel (46) zum Befestigen von Wickeldrahtenden aufweist.

17. Einrichtung nach einem der Ansprüche 13 bis 16, **dadurch gekennzeichnet, daß** der Isolationskörper zwei Kunststoff-Spritzgußteile umfaßt.
